# FASCICULE DE BREVET EUROPEEN

(11) **EP 2 065 234 B1**
(45) Date de publication et mention de la délivrance du brevet: **03.11.2010**
(21) Numéro de dépôt: 08169439.0
(22) Date de dépôt: 19.11.2008
(51) Int. Cl.: B60H 1/34, B60H 3/00, B62D 1/06

(54) **Diffuseur d'air pour habitacle de véhicule automobile**
Luftverteiler für Innenraum eines Kraftfahrzeugs
Air diffuser for an automobile passenger compartment

(30) Priorité: 28.11.2007 FR 0759398; 28.11.2007 FR 0759399
(43) Date de publication de la demande: 03.06.2009
(73) Titulaire: Peugeot Citroën Automobiles SA, 78140 Vélizy-Villacoublay (FR)
(72) Inventeur: Appasamy, Jean-Michel, 78760, Jouars Ponchartrain (FR); Jeuffe, Gérard, 78580, Bazemont (FR)

(56) Documents cités:
- GB-A- 191 418 911
- US-A- 1 358 451
- US-A- 2 662 961
- US-A- 3 149 501

## Description

La présente invention est relative à un dispositif permettant de diffuser à l'intérieur de l'habitacle d'un véhicule automobile un courant d'air additionnel, froid ou chaud, à température régulée, provenant de l'ensemble de climatisation dont est usuellement équipé ce véhicule afin de délivrer un débit principal convenablement réparti dans cet habitacle, en ajoutant, le cas échéant, à ce courant d'air additionnel un parfum d'ambiance, sa diffusion s'effectuant par l'intermédiaire du volant du véhicule.

La manoeuvre d'un véhicule automobile par commande de son volant de direction, notamment en cas de chaleurs extérieures élevées ou dans des climats relativement humides peut, dans ces conditions ambiantes particulières et/ou pour certains conducteurs, provoquer une transpiration notable de leurs mains qui tiennent le volant pour diriger le véhicule, ce qui est désagréable et peut faire glisser intempestivement ce volant, qui risque ainsi de pivoter de façon non souhaitée. En période hivernale, le contact des mains avec le volant peut également produire une sensation de froid, peu confortable.

Dans le but de réduire ces inconvénients, le document US 3 149 501, qui est considéré comme l'art antérieur le plus proche, divulgue un diffuseur d'air relié au circuit de climatisation du véhicule qui assure la fourniture dans l'habitacle d'air de chauffage ou de refroidissement selon le cas, en permettant qu'une fraction de cet air soit dérivée jusque dans le volant du véhicule et renvoyée dans l'habitacle, notamment par une pluralité d'orifices de sortie prévus de préférence dans la périphérie de ce volant, tenu entre les mains du conducteur.

A cet effet, le diffuseur connu de US 3 149 501, pour délivrer un débit d'air additionnel dans l'habitacle d'un véhicule automobile par l'intermédiaire du volant de conduite, comporte un distributeur creux, de forme cylindrique, constitué d'une couronne circulaire fixe, coaxiale à la colonne de direction de ce véhicule, et d'une couronne mobile, montée libre en rotation sur cette couronne fixe et solidarisée du volant qui entraîne la colonne de direction, se caractérise en ce qu'il comporte une canalisation de liaison entre un ensemble de climatisation fournissant un débit d'air principal, chaud ou froid, à l'intérieur de l'habitacle, cette canalisation prélevant le débit d'air additionnel pour l'admettre dans le distributeur à travers la couronne fixe, ce débit additionnel étant repris par un tube de renvoi, réuni au distributeur à travers la couronne mobile, l'air admis dans ce tube de renvoi étant délivré dans une zone creuse ménagée à l'intérieur du volant et évacué hors de celle-ci par une pluralité d'orifices de sortie vers l'extérieur, en liaison avec la zone creuse et de préférence régulièrement ménagés dans le cercle de préhension qui forme la périphérie de ce volant. La présente invention vise à augmenter le confort du conducteur. Dans ce but, l'invention permet d'ajouter au débit d'air additionnel délivré à travers le volant, un parfum d'ambiance selon une proportion qui est ajustable à volonté au moyen d'un organe de commande prévu sur ce volant et actionné à son gré par le conducteur.

Selon l'invention, le tube de renvoi entre la couronne mobile du distributeur cylindrique et la zone creuse à l'intérieur du volant est réunie à une réserve de parfum d'ambiance, propre à imprégner une fraction ajustable du débit d'air additionnel provenant du distributeur, avant son admission dans le volant.

Avantageusement, le distributeur et la réserve de parfum sont reliés à travers un mélangeur réglable, apte à répartir le débit d'air additionnel délivré par le tube de renvoi de telle sorte qu'une fraction variable et ajustable de ce débit traverse la réserve de parfum pour s'en imprégner avant admission dans le volant.

Dans un mode de réalisation préféré, le mélangeur réglable comporte un bâti fixe, muni d'un orifice d'admission du débit d'air additionnel provenant du distributeur dans un logement interne réuni par deux conduits distincts en communication respectivement avec l'entrée et la sortie de la réserve de parfum, un tube de by-pass monté entre le tube de renvoi et le conduit relié à la sortie de la réserve de parfum, et un tiroir, coulissant à l'intérieur du logement interne, muni d'au moins deux perçages transversaux ou équivalents, dont la position avec le déplacement du tiroir permet d'ouvrir ou de fermer de manière ajustable les deux conduits pour la traversée de la réserve de parfum par une fraction variable du débit d'air additionnel à imprégner.

De préférence, le tiroir coulissant du mélangeur comporte, à l'extérieur du bâti fixe, un pion de manoeuvre, propre à provoquer le déplacement de ce tiroir dans le logement interne et agir sur la position relative des perçages transversaux en regard des conduits d'entrée et de sortie de la réserve de parfum.

De préférence également, le pion de manoeuvre coopère avec un levier formant came, monté pivotant par rapport au bâti fixe du mélangeur autour d'un axe de rotation excentré, la commande de position du levier pivotant provoquant le déplacement du pion et par suite du tiroir coulissant dans le logement interne du mélangeur.

Avantageusement, le levier formant came comporte un profil extérieur en forme de secteur circulaire autour de l'axe de rotation, de telle sorte qu'un effort tangentiel exercé sur ce profil permette de faire pivoter le levier autour de cet axe en provoquant le déplacement du tiroir coulissant dans le logement interne du mélangeur par l'intermédiaire du pion de manoeuvre, libre de glisser dans une fente allongée prévue sur le levier.

Selon une caractéristique particulière, le profil extérieur en forme de secteur circulaire du levier formant came est strié pour constituer une molette de commande, apte à être actionnée dans un sens ou dans l'autre, par le doigt du conducteur.

Avantageusement, la molette de commande est logée dans une ouverture ménagée dans un bras diamétral réunissant la colonne de direction au cercle de préhension du volant.

D'autres caractéristiques d'un diffuseur d'air, éventuellement parfumé en proportions ajustables à volonté, à travers le volant d'un véhicule automobile, apparaîtront encore à travers la description qui suit d'un exemple de réalisation, donné à titre indicatif et non limitatif, en référence aux dessins annexés sur lesquels :
- La Figure 1 est une vue schématique en perspective, illustrant le distributeur cylindrique, relié respectivement au volant de conduite actionnant la colonne de direction d'un véhicule automobile, et à l'ensemble de climatisation de ce dernier.
- La Figure 2 est une vue en élévation et en coupe, à plus grande échelle, du mélangeur réglable d'air et de parfum, avec son tiroir coulissant, son levier de commande, la réserve de ce parfum et les diverses liaisons établies entre ces éléments.

- La Figure 3 représente schématiquement le tube de renvoi du débit d'air additionnel provenant du distributeur, et ses éléments de raccordement, avec le mélangeur réglable et la réserve de parfum.
- Les Figures 4a à 4c sont des schémas du mélangeur réglable, permettant d'expliciter la manière dont il est mis en oeuvre avec le diffuseur d'air selon l'invention.
- La Figure 5 est une vue en plan, à plus grande échelle, du volant du véhicule, illustrant notamment le positionnement de la molette de commande du mélangeur réglable sur le bras du volant et la répartition différenciée des orifices de sortie du débit d'air dans le cercle de préhension de ce volant.

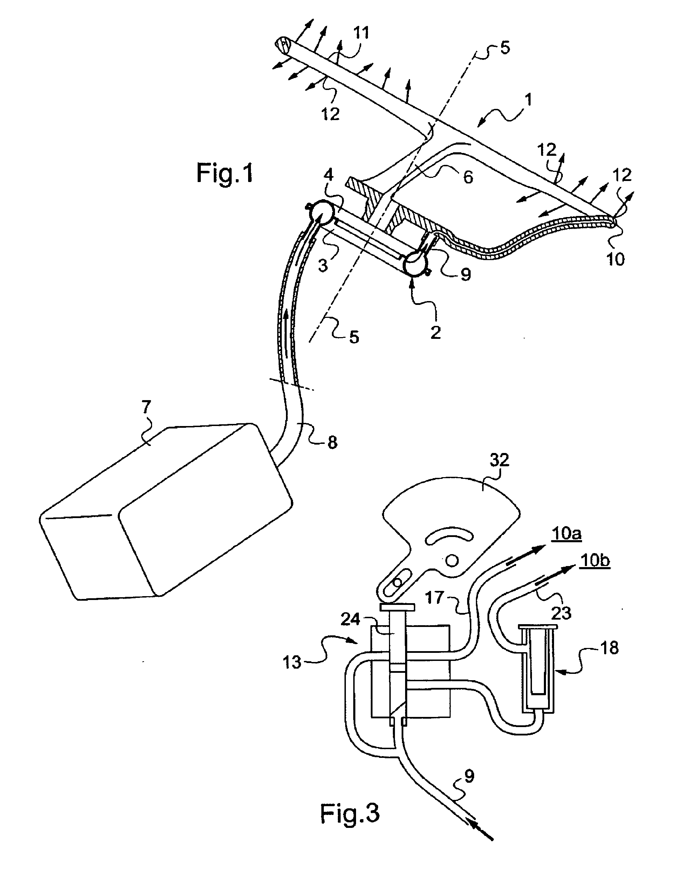

Sur la Figure 1, la référence 1 désigne le volant de direction d'un véhicule automobile, ce volant étant associé à un distributeur d'air 2, creux, de forme générale cylindrique, formé d'une couronne circulaire fixe 3 et d'une couronne mobile 4, également circulaire et emboîtée à coulissement rotatif sur la couronne fixe, celle-ci étant notamment liée à un élément tubulaire (non représenté) qui constitue le fût entourant la colonne de direction par laquelle le volant 1 transmets ses mouvements de rotation aux roues du véhicule, cette colonne et ses organes de transmission, en eux-mêmes classiques dans la technique et dont le détail n'importe pas à l'invention de sorte qu'il n'est pas nécessaire de décrire ici, étant simplement schématisés sur le dessin par un axe 5, représenté sous la forme d'une ligne pointillée qui s'étend dans une direction sensiblement perpendiculaire au plan dans lequel se situe le volant 1.

La couronne mobile 4 est reliée au volant 1 par une pièce de liaison 6 et tourne librement avec celui-ci sur la couronne fixe 3 autour de l'axe 5, des moyens d'étanchéité (non représentés) étant prévus entre ces deux couronnes pour isoler le distributeur 2 qui, dans l'exemple considéré, épouse sensiblement la forme d'un tore, et permettre que l'air qu'il contient ne s'échappe vers l'extérieur de ce distributeur, lors du déplacement relatif de la couronne mobile entraînée par le volant vis-à-vis de la couronne fixe.

La référence 7 désigne par ailleurs un ensemble de climatisation, apte à délivrer dans l'habitacle du véhicule, généralement avec l'aide d'un ventilateur réglable, un débit principal d'air, soit réchauffé, notamment lorsqu'il est prélevé dans le circuit de refroidissement du moteur au moyen des calories provenant du radiateur du véhicule, soit refroidi par les frigories produites par un système de réfrigération approprié, la température de l'air chaud ou froid et la valeur du débit d'air fourni dans l'habitacle étant ajustables au gré de l'utilisateur.

Cet ensemble de climatisation 7 est agencé pour permettre de prélever à partir de celui-ci un débit d'air additionnel au moyen d'une canalisation de liaison 8, dont une extrémité se raccorde à cet ensemble et dont l'autre débouche dans le distributeur 2, à travers la couronne fixe 3 de celui-ci, ce débit d'air additionnel étant repris à travers la couronne mobile 4 par un tube de renvoi 9 qui l'achemine dans une zone creuse 10, ménagée à l'intérieur du volant 1, en particulier dans le cercle de préhension 11 de celui-ci, que le conducteur serre entre ses mains pour imposer à la colonne de direction 5 les mouvements de rotation nécessaires à la conduite du véhicule.

Selon l'invention, le cercle 11 du volant 1 comporte une pluralité d'orifices de sortie 12, de préférence régulièrement répartis selon la périphérie de ce cercle et dirigés vers l'extérieur du volant pour permettre au débit d'air admis dans la zone creuse 10 de s'échapper hors de celle-ci et de venir directement au contact des mains du conducteur qui tient ce volant ainsi que dans leur voisinage immédiat pour en assurer, selon le cas, le réchauffement ou le refroidissement en fonction de la température de cet air et du réglage choisi pour l'ensemble de climatisation 7.

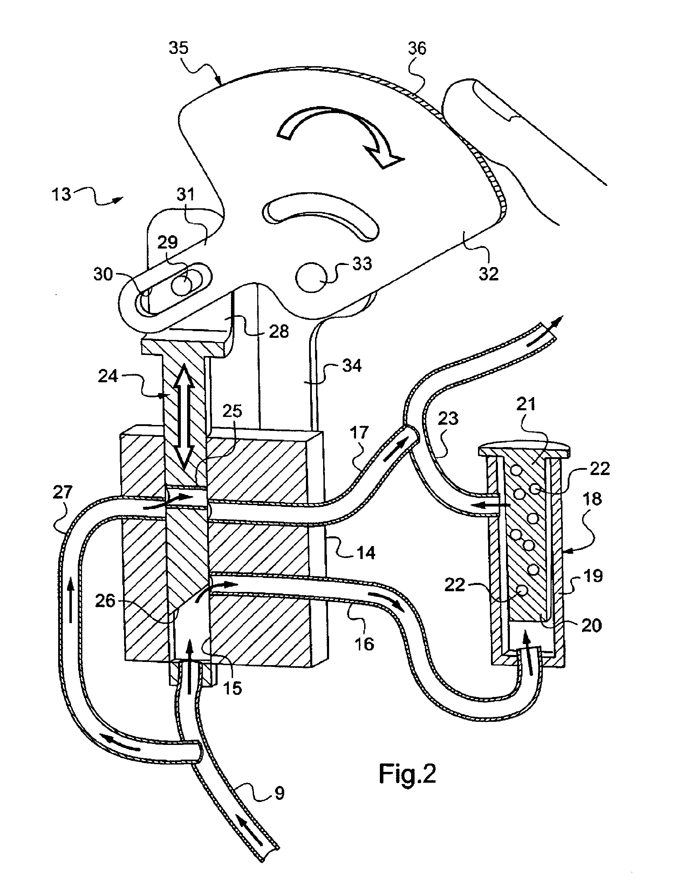

L'invention permet par ailleurs d'imprégner à volonté, tout ou partie de ce débit d'air additionnel par un parfum d'ambiance, en le faisant traverser, avant qu'il ne soit délivré dans le volant 1, un mélangeur réglable 13, qui ne figure pas sur la Figure 1, mais dont la Figure 2 illustre à plus grande échelle, un mode de réalisation particulier.

Sur cette Figure 2, on retrouve le tube de renvoi 9, relié à la couronne mobile 4 du distributeur 2 (ici non représentés) et par lequel s'écoule le débit d'air additionnel provenant de l'ensemble de climatisation, avant d'être délivré dans le volant 1 de la façon précisée ci-dessus.

Le mélangeur 13, monté entre le distributeur 2 et le volant 1, comporte un boîtier 14, muni d'un logement interne 15 auquel se raccorde le tube de renvoi 9, ce logement, qui s'étend de préférence verticalement dans le boîtier, pouvant lui-même être mis en communication avec l'extrémité de deux conduits 16 et 17, superposés selon la hauteur du logement et respectivement réunis, à leur extrémité opposée, à l'entrée et à la sortie d'une réserve de parfum 18, extérieure au boîtier 14.

Cette réserve 18 se compose avantageusement d'une capsule rechargeable 19, dans laquelle peut être disposée une cartouche amovible et remplaçable 20 d'un parfum d'ambiance, imprégnant un support 21 enfermé dans la cartouche dont la paroi externe présente des orifices de passage 22, le montage de la cartouche dans sa capsule étant tel que le débit d'air additionnel, sortant du boîtier 14 du mélangeur 13 et acheminé vers la réserve 18 par le conduit d'entrée 16 selon le sens des flèches sur le dessin, traverse nécessairement cette cartouche 20 pour s'imprégner du parfum de celle-ci, avant de s'évacuer hors de la capsule 19 par les orifices de passage 22, et d'être repris par une canalisation de raccordement 23, dans laquelle débouche également, à l'extérieur de la réserve de parfum 18, le conduit de sortie 17, cette canalisation 23 étant raccordée à la zone creuse 10 du volant 1, en communication, comme déjà précisé, avec les orifices de sortie 12 répartis dans le cercle 11 de ce volant.

Pour faire varier la fraction du débit d'air additionnel, provenant de l'ensemble de climatisation 7 via le distributeur 2, ainsi forcée à traverser la cartouche de parfum 20 contenue dans la capsule 19, le logement interne 15 du boîtier 14 est agencé pour coopérer avec un tiroir 24, apte à coulisser dans ce logement et qui, dans l'exemple représenté, comporte un perçage transversal 25 d'une part, et à son l'extrémité terminale une face en biseau 26.

La distance qui sépare le perçage transversal 25 de la face d'extrémité en biseau 26 sur la hauteur du tiroir coulissant 24, est déterminée par construction de telle sorte que, lorsque cette face est amenée en regard du conduit d'entrée 16 dans la réserve de parfum 18 et ouvre plus ou moins, selon sa position relative dans le boîtier 14, la communication avec ce conduit, le perçage 25 soit décalé vers le haut par rapport au conduit de sortie 17, le tiroir coulissant 24 fermant dans ce cas toute communication avec la réserve par ce conduit 17.

A l'inverse, lorsque le tiroir coulissant 24, déplacé en sens opposé, amène le perçage 25 complètement en regard du conduit de sortie 17, la face d'extrémité en biseau 26 est décalée vers le bas au-delà du conduit d'entrée 16, dont la communication directe avec le tube de renvoi 9 est ainsi empêchée.

Dans ce dernier cas, le débit d'air additionnel qui s'écoule dans ce tube de renvoi 9 est entièrement repris par un tube de by-pass 27, relié dans cette situation au conduit de sortie 17 à travers le perçage 25 du tiroir coulissant 24, lequel est alors directement amené en regard de ce tube 27.

Le tiroir coulissant 24 comporte une patte 28, qui le prolonge vers le haut à l'extérieur du boîtier 14, cette patte étant munie d'un pion de manoeuvre 29 en saillie, agencé pour permettre d'exercer sur le tiroir un effort de traction vers le haut, ou inversement de poussée vers le bas.

Dans ce but, le pion 29 est librement monté dans une fente allongée 30, prévue dans un bras 31 d'un levier plat 32, pivotant et formant came, articulé autour d'un axe 33, excentré vis-à-vis du pion 29 et porté par une extension fixe 34, solidaire du boîtier 14.

La partie du levier 32 opposée au bras 31 qui comporte la fente allongée 30 recevant le pion 29, est avantageusement conformée en secteur circulaire 35, dont le centre est confondu avec l'axe 33, de sorte qu'un effort tangentiel exercé sur ce secteur puisse faire pivoter le levier 32 autour de l'axe 33 en permettant au pion 29 de décrire la fente allongée 30 du bras et d'exercer selon le cas, sur le tiroir coulissant 24, une traction ou une poussée le déplaçant dans son logement 15, en jouant ainsi sur les positions relatives de son perçage 25 et de sa face d'extrémité en biseau 26 vis-à-vis des conduits d'entrée et de sortie 16 et 17 du boîtier 14. Avantageusement, pour mieux faciliter, au gré du conducteur notamment, la variation de position angulaire du secteur circulaire 35 par pivotement de celui-ci autour de son axe 33, ce secteur présente sur sa tranche, un profil strié 36, formant molette de commande, sur laquelle s'applique le doigt de l'utilisateur pour la faire tourner dans un sens ou dans l'autre.

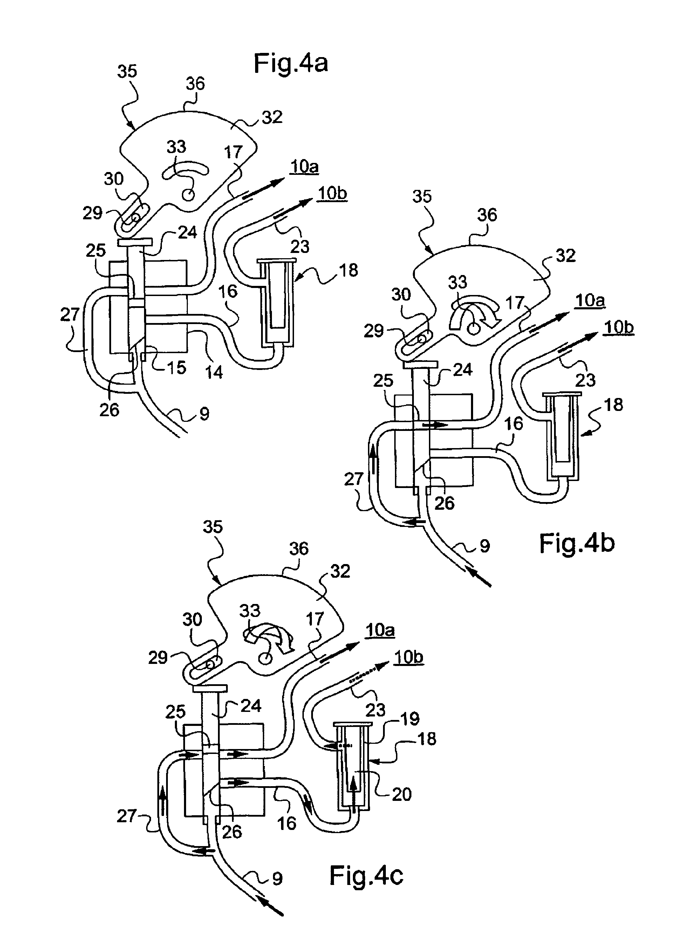

Conformément à l'invention et comme schématiquement représenté sur la Figure 2, le tube de renvoi 9 est réuni à un mélangeur réglable 13 et une réserve de parfum 18, illustrés de manière succincte sur cette même Figure 3 mais dont les Figures 4à à 4c et 5, décrites par la suite, explicitent plus en détail la réalisation et la mise en oeuvre, les sorties du mélangeur et de la réserve de parfum étant séparément réunies par des conduits de communication 17 et 23 aux orifices prévus dans la zone creuse 10 du volant 1, aménagée pour différencier les débits d'air délivrés par les orifices de sortie 12 répartis dans le cercle 11 de celui-ci.

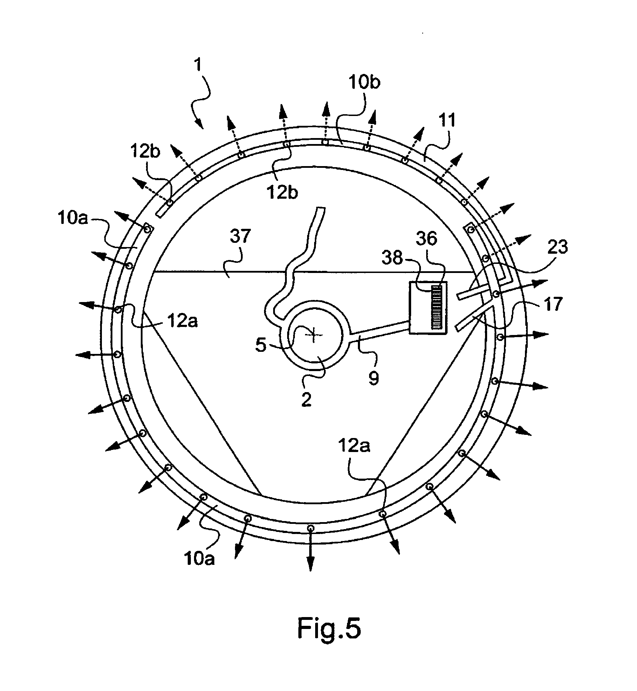

Notamment, ces orifices de sortie d'air 12 se répartissent dans cette zone, comme vu plus en détail sur la Figure 5, selon deux séries d'orifices 12a et 12b, ces orifices, individualisés, qui sont de préférence régulièrement répartis selon la périphérie de ce cercle, étant ménagés dans deux parties séparées et non communicantes 10a et 10b de la zone creuse 10, afin de permettre au débit d'air, admis respectivement dans chacune d'elles, par les conduits de raccordement 17 et 23, de s'échapper de façon indépendante hors du volant.

Les Figures 4a à 4c précisent la mise en oeuvre du diffuseur d'air selon l'invention, selon les desiderata du conducteur.

Sur la Figure 4a, le tiroir coulissant 24 est en position basse extrême, le pion de manoeuvre 29 étant amené dans la fente allongée 30 dans la position qui correspondant à une rotation maximale du secteur circulaire 35 du levier pivotant 32, commandée par action sur la molette 36, ici dans le sens inverse des aiguilles d'une montre.

Dans cette position, le tiroir 24 ferme aussi bien le conduit d'entrée 16 que le conduit de sortie 17 du mélangeur 13 vers la réserve de parfum 18, l'écoulement de l'air additionnel amené dans le tube de renvoi 9 à partir du distributeur 2, étant annihilé en totalité, les orifices de sortie 11 du cercle de préhension 12 du volant 1 ne délivrant aucun débit aussi bien d'air que de parfum, vers les mains du conducteur.

Dans la position illustrée sur la Figure 4b, où le pion de manoeuvre 29 est déplacé dans la fente 30 suite à une rotation appropriée mais limitée du secteur circulaire 35, cette fois dans le sens horaire, le tiroir coulissant 24 est déplacé vers le haut dans son logement 15, jusqu'à ce que le perçage 25 soit amené en regard du conduit de sortie 17.

Le débit d'air additionnel peut ainsi traverser en totalité le tiroir 24 avant d'être repris, au-delà du conduit 17, par la canalisation de raccordement 23 qui l'achemine vers la zone creuse 10 du cercle de préhension 12 du volant 1, d'où il est alors expulsé vers l'extérieur et notamment vers les mains du conducteur, par les orifices de sortie 11 prévus dans ce cercle.

Dans cette position, la réserve de parfum 18 est inactive, la face d'extrémité en biseau 26 du tiroir 24 étant encore suffisamment décalée vis-à-vis du conduit d'entrée 16 dans la capsule 19 pour interdire qu'une fraction quelconque du débit d'air ne traverse la réserve et notamment la cartouche 20 contenue dans cette capsule.

Dans ce cas en effet, tout le débit d'air délivré au mélangeur 13 par le tube de renvoi 9 relié au distributeur 2, circule dans le tube de by-pass 27 et au-delà, après traversée du tiroir coulissant 24 par le perçage 25, dans la canalisation de raccordement 23, qui à son tour l'amène au volant 1 de la manière indiquée, en évitant le passage, même d'une fraction réduite de ce débit, dans la réserve 18.

La Figure 4c illustre une position intermédiaire où le perçage 25 du tiroir coulissant 24 est partiellement en regard du conduit 17, pendant que, simultanément, la face en biseau 26 de l'extrémité basse de ce tiroir est de même partiellement disposée devant le conduit 16.

Dans ce cas, le mélangeur 13 permet d'autoriser, en même temps que le passage à travers le tiroir 24 par le perçage 25 d'une partie du débit d'air additionnel, admis depuis le distributeur 2 par le tube de renvoi 9 et recueilli ensuite dans la canalisation de raccordement 23, le transfert de l'autre partie de ce débit sous la face en biseau 26 et au-delà dans le conduit d'entrée 16 de la réserve de parfum 18, cette fraction d'air complémentaire, qui traverse la cartouche 20 logée dans la capsule 19 se chargeant avec le parfum avant qu'elle ne soit renvoyée à son tour dans la canalisation de raccordement 23 et par la suite, dans la zone creuse 10 du volant 1, en se mélangeant avec l'autre fraction d'air, non parfumée.

L'utilisateur peut ainsi, par simple action de pivotement de la molette striée 36 du secteur circulaire 35 dans le sens adéquat, faire varier autant que désiré, les proportions d'air parfumé ou non parfumé, amenées dans la zone creuse 10 du cercle de préhension 11 du volant 1 et renvoyées à l'extérieur par les orifices 12, notamment entre des situations extrêmes où, soit aucun passage d'air et de parfum n'est autorisé, soit l'air est en totalité imprégné par le parfum, et toute position intermédiaire, où les fractions relatives d'air pur et d'air parfumé respectivement peuvent être modulées à volonté, par ajustement de la position du tiroir coulissant dans le logement interne du boîtier.

La Figure 5 illustre en vue extérieure le volant 1, dont le cercle de préhension 11 comporte les orifices de sortie 12a et 12b pour l'échappement de l'air, parfumé ou non, amené dans le volant de façon différencié, respectivement par l'un et par l'autre des conduits de raccordement 17 et 23, comme précisé précédemment en référence au schéma de la Figure 2.

Sur cette Figure 5, on a représenté le bras transversal 37 qui solidarise la colonne de direction avec le volant 1, et transmet à celle-ci les mouvements de rotation du cercle de préhension 11 pour la manoeuvre du véhicule.

Sur ce bras 37, on a avantageusement prévu une ouverture 38, par laquelle apparaît le profil strié 36 de la molette de commande, permettant le réglage du mélangeur 13 et l'ajustement des fractions du débit d'air pur et d'air parfumé admis dans les parties 10a et 10b, distinctes et séparées de la zone creuse 10 du volant en provenance du tube de renvoi 9, cette molette étant de ce fait immédiatement accessible au conducteur qui peut au doigt en modifier facilement la position pour agir sur ce débit et régler l'importance de la diffusion du parfum effectuée.

Selon l'invention, les deux parties 10a et 10b de la zone creuse 10 ménagée dans le cercle de préhension 11 du volant 1 sont entièrement indépendantes l'une de l'autre, la première 10a, qui comporte les orifices 12a, recevant par le conduit 17 au-delà du passage 25 du tiroir coulissant 24 du mélangeur réglable 13, la fraction du débit d'air additionnel directement acheminée à travers le distributeur 2 par le tube de renvoi 9, sans passer par la réserve de parfum 18.

La seconde 10b reçoit la fraction restante du débit d'air, ajustée selon la position du tiroir 24 dans son logement 25, ce débit complémentaire passant par le conduit 16 d'entrée dans la réserve de parfum 18 en proportions à tout moment réglables par la molette 36, avant d'être ensuite délivré à l'extérieur du volant 1 par les orifices 12b en communication avec cette partie 10b, séparée de la partie 10a.

On réalise ainsi un diffuseur d'air présentant une grande efficacité et procurant au conducteur, au niveau de ses mains qui tiennent le volant, un confort accru, aussi bien en période estivale qu'hivernale.

Bien entendu, il va de soi que l'invention ne se limite pas au seul exemple de réalisation décrit ci-dessus en référence aux dessins annexés ; elle en embrasse au contraire toutes les variantes.

## Revendications

1. Diffuseur pour délivrer un débit d'air additionnel dans l'habitacle d'un véhicule automobile par l'intermédiaire du volant (1) de conduite, comportant un distributeur creux (2), de forme cylindrique, constitué d'une couronne circulaire fixe (3), coaxiale à la colonne de direction (5) de ce véhicule, et d'une couronne mobile (4), montée libre en rotation sur cette couronne fixe et solidarisée du volant qui entraîne la colonne de direction, comportant une canalisation de liaison (8) entre un ensemble de climatisation (7) fournissant un débit d'air principal, chaud ou froid, à l'intérieur de l'habitacle, cette canalisation prélevant le débit d'air additionnel pour l'admettre dans le distributeur (2) à travers la couronne fixe (3), ce débit additionnel étant repris par un tube de renvoi (9), réuni au distributeur à travers la couronne mobile (4), l'air admis dans ce tube de renvoi étant délivré dans une zone creuse (10) ménagée à l'intérieur du volant (1) et évacué hors de celle-ci par une pluralité d'orifices (12) de sortie vers l'extérieur, en liaison avec la zone creuse et de préférence régulièrement ménagés dans le cercle de préhension (11) qui forme la périphérie de ce volant, **caractérisé en ce que** le tube de renvoi (9) entre la couronne mobile (4) du distributeur cylindrique (2) et la zone creuse (10) à l'intérieur du volant (1) est réuni à une réserve de parfum d'ambiance (18), propre à imprégner une fraction ajustable du débit d'air additionnel provenant du distributeur, avant son admission dans le volant.

2. Diffuseur selon la revendication 1, **caractérisé en ce que** le distributeur (2) et la réserve de parfum (18) sont reliés à travers un mélangeur réglable (13), apte à répartir le débit d'air additionnel délivré par le tube de renvoi (9) de telle sorte qu'une fraction variable et ajustable de ce débit traverse la réserve de parfum pour s'en imprégner avant admission dans le volant (1).

3. Diffuseur selon la revendication 2, **caractérisé en ce que** le mélangeur réglable (13) comporte un bâti fixe (14), muni d'un orifice d'admission du débit d'air additionnel provenant du distributeur (2) par le tube de renvoi (9) dans un logement interne (15) réuni par deux conduits distincts (16,17) en communication respectivement avec l'entrée et la sortie de la réserve de parfum (18), un tube de by-pass (27) monté entre le tube de renvoi et le conduit (17) relié à la sortie de la réserve de parfum, et un tiroir (24), coulissant à l'intérieur du logement interne, muni d'au moins deux perçages transversaux ou équivalents (25,26), dont la position avec le déplacement du tiroir permet d'ouvrir ou de fermer de manière ajustable les deux conduits (16,17) pour la traversée de la réserve de parfum par une fraction variable du débit d'air additionnel à imprégner.

4. Diffuseur selon la revendication 3, **caractérisé en ce que** le tiroir coulissant (24) du mélangeur (13) comporte, à l'extérieur du bâti fixe (14), un pion de manoeuvre (29), propre à provoquer le déplacement de ce tiroir dans le logement interne (15) et agir sur la position relative des perçages transversaux (25,26) en regard des conduits d'entrée et de sortie (16,17) de la réserve de parfum (18).

5. Diffuseur selon l'une des revendications 3 ou 4, **caractérisé en ce que** le pion de manoeuvre (29) coopère avec un levier (32) formant came, monté pivotant par rapport au bâti fixe (14) du mélangeur (13) autour d'un axe de rotation excentré (33), la commande de position du levier pivotant (32) provoquant le déplacement du pion (29) et par suite du tiroir coulissant (24) dans le logement interne (15) du mélangeur.

6. Diffuseur selon la revendication 5, **caractérisé en ce que** le levier (32) formant came comporte un profil extérieur en forme de secteur circulaire (35) autour de l'axe de rotation (33), de telle sorte qu'un effort tangentiel exercé sur ce profil permette de faire pivoter le levier autour de cet axe en provoquant le déplacement du tiroir coulissant (24) dans le logement interne (15) du mélangeur (13) par l'intermédiaire du pion (29), libre de glisser dans une fente allongée (30) prévue sur le levier.

7. Diffuseur selon la revendication 6, **caractérisé en ce que** le profil extérieur en forme de secteur circulaire (35) du levier formant came (32) est strié pour constituer une molette de commande (36), apte à être actionnée dans un sens ou dans l'autre, par le doigt du conducteur.

8. Diffuseur selon la revendication 7, **caractérisé en ce que** la molette de commande (36) est logée dans une ouverture (38) ménagée dans un bras diamétral (37) réunissant la colonne de direction (5) au cercle de préhension (11) du volant(1).

9. Diffuseur selon les revendications 1 à 8, **caractérisé en ce que** les orifices de sortie (12) sont individualisés, une partie (12a) de ces orifices étant réservée à la délivrance d'air pur provenant de l'ensemble de climatisation (7) via un mélangeur réglable (13) et l'autre partie (12b) à la délivrance d'air éventuellement parfumé via ce mélangeur et une réserve de parfum (18), ces orifices (12a,12b) étant respectivement en communication avec deux parties indépendantes et séparées (10a,10b) de la zone creuse (10), alimentées par deux conduits de raccordement distincts avec les sorties du mélangeur réglable (13) et de la réserve de parfum (18) respectivement.

10. Diffuseur selon les revendications 1 à 9, **caractérisé en ce que** le distributeur (2) et la réserve de parfum (18) sont reliés à travers le mélangeur réglable (13) apte à répartir le débit d'air additionnel délivré par le tube de renvoi (9), de telle sorte qu'une fraction variable et ajustable de ce débit traverse la réserve de parfum pour s'en imprégner avant admission dans le volant (1).

11. Diffuseur selon les revendications 1 à 10, **caractérisé en ce que** le mélangeur réglable (13) comporte un bâti fixe (14), muni d'un orifice d'admission du débit d'air additionnel provenant de l'ensemble de climatisation par le tube de renvoi (9), un logement interne (15) réuni par deux conduits de communication distincts (16,17), respectivement avec l'entrée de la réserve de parfum (18) et directement avec une des parties (10a) de la zone creuse du volant, un tube de by-pass (27) monté entre le tube de renvoi (9) et le conduit de raccordement (23) relié à la sortie du mélangeur réglable (18), et un tiroir (24), coulissant à l'intérieur du logement interne, muni de perçages transversaux ou équivalents (25,26), dont la position avec la position du tiroir permet d'ouvrir ou de fermer de manière ajustable les deux conduits de communication pour la traversée de la réserve de parfum par la fraction variable du débit d'air additionnel à imprégner.

## Claims

1. A diffuser to deliver an additional flow of air in the passenger compartment of an automobile vehicle via the steering wheel (1)comprising a hollow distributor (2), of cylindrical shape, constituted by a fixed circular crown (3), coaxial to the steering column (5) of this vehicle, and a movable crown (4), mounted freely in rotation on this fixed crown and secured to the steering wheel which entrains the steering column, comprising a connecting duct (8) between an air-conditioning unit (7) providing a main flow of air, hot or cold, inside the passenger compartment, this duct removing the additional flow of air to admit it in the distributor (2) through the fixed crown (3), this additional flow being taken up again by a return tube (9), joined to the distributor through the movable crown (4), the air admitted in this return tube being delivered in a hollow zone (10) arranged inside the steering wheel (1) and evacuated therefrom by a plurality of outlet orifices (12) towards the exterior, in connection with the hollow zone and preferably arranged regularly in the gripping circle (11) which forms the periphery of this steering wheel, **characterized in that** the return tube (9) between the movable crown (4) of the cylindrical distributor (2) and the hollow zone (10) inside the steering wheel (1) is connected to a reserve of air freshener (18), suited to impregnate an adjustable fraction of the flow of additional air originating from the distributor, before its admission in the steering wheel.

2. The diffusor according to Claim 1, **characterized in that** the distributor (2) and the air freshener reserve (18) are connected through an adjustable mixer (13), suited to distribute the flow of additional air delivered by the return tube (9) such that a variable and adjustable fraction of this flow passes through the air freshener reserve, to be impregnated therewith before admission in the steering wheel (1).

3. The diffusor according to Claim 2, **characterized in that** the adjustable mixer (13) comprises a fixed structure (14), provided with an orifice for the admission of the flow of additional air originating from the distributor (2) by the return tube (9) in an internal housing (15) connected by two separate conduits (16, 17) in communication respectively with the inlet and the outlet of the air freshener reserve (18), a by-pass tube (27) mounted between the return tube and the conduit (17) connected to the outlet of the air freshener reserve, and a slider (24), sliding inside the internal housing, provided with at least two transverse bores or equivalent (25, 26), the position of which with the displacement of the slider allows the two conduits (16, 17) to be opened or closed in an adjustable manner for the passing through of the air freshener reserve by a variable fraction of the flow of additional air which is to be impregnated.

4. The diffusor according to Claim 3, **characterized in that** the sliding slider (24) of the mixer (13) comprises, on the exterior of the fixed structure (14), an operating pin (29), suited to cause the displacement of this slider in the internal housing (15) and to act on the relative position of the transverse bores (25, 26) with respect to the inlet and outlet conduits (16, 17) of the air freshener reserve (18).

5. The diffusor according to one of Claims 3 or 4, **characterized in that** the operating pin (29) cooperates with a lever (32) forming a cam, pivotally mounted with respect to the fixed structure (14) of the mixer (13) about an eccentric rotation axis (33), the controlling of the position of the pivoting lever (32) causing the displacement of the pin (29) and consequently of the sliding slider (24) in the internal housing (15) of the mixer.

6. The diffusor according to Claim 5, **characterized in that** the lever (32) forming a cam comprises an external profile in the form of a circular sector (35) about the rotation axis (33), such that a tangential stress exerted on this profile allows the lever to be pivoted about this axis, causing the displacement of the sliding slider (24) in the internal housing (15) of the mixer (13) by means of the pin (29), free to slide in an elongated slot (30) provided on the lever.

7. The diffusor according to Claim 6, **characterized in that** the external profile in the form of a circular sector (24) of the lever forming a cam (32) is ridged to constitute a finger roller control (36), suited to be actuated in one direction or the other by the driver's finger.

8. The diffusor according to Claim 7, **characterized in that** the finger roller control (36) is housed in an opening (38) arranged in a diametral arm (37) connecting the steering column (5) to the gripping circle (11) of the steering wheel (1).

9. The diffusor according to Claims 1 to 8, **characterized in that** the outlet orifices (12) are individualized, one part (12a) of these orifices being reserved for the delivery of pure air originating from the air-conditioning unit (7) via an adjustable mixer (13) and the other part (12b) for the delivery of air, possibly scented via this mixer, and an air freshener reserve (18), these orifices (12a, 12b) being respectively in communication with two independent and separate parts (10a, 10b) of the hollow zone (10), supplied by two distinct connecting conduits with the outlets of the adjustable mixer (13) and of the air freshener reserve (18) respectively.

10. The diffusor according to Claims 1 to 9, **characterized in that** the distributor (2) and the air freshener reserve (18) are connected through the adjustable mixer (13) suited to distribute the flow of additional air delivered by the return tube (9), such that a variable and adjustable fraction of this flow passes through the air freshener reserve to be impregnated therewith before admission in the steering wheel (1).

11. The diffusor according to Claims 1 to 10, **characterized in that** the adjustable mixer (13) comprises a fixed structure (14), provided with an orifice for the admission of the flow of additional air originating from the air-conditioning unit via the return tube (9), an internal housing (15) connected by two distinct communication conduits (16, 17), respectively with the inlet of the air freshener reserve (18) and directly with one of the parts (10a) of the hollow zone of the steering wheel, a by-pass tube (27) mounted between the return tube (9) and the connecting conduit (23) connected to the outlet of the adjustable mixer (18), and a slider (24), sliding inside the internal housing, provided with transverse bores or equivalent (25, 26), the position of which with the position of the slider allows the two communication conduits to be opened or closed in an adjustable manner for the passing through of the air freshener reserve by the variable fraction of the flow of additional air which is to be impregnated.

## Patentansprüche

1. Diffusionsvorrichtung zum Abgeben eines zusätzlichen Luftdurchflusses in die Fahrgastzelle eines Kraftfahrzeugs über das Fahrlenkrad (1), der einen hohlen Verteiler (2) mit zylindrischer Form aufweist, der aus einem stationären kreisförmigen Kranz (3) besteht, der zu der Lenksäule (5) dieses Fahrzeugs koaxial ist, und aus einem beweglichen Kranz (4), der in Drehung frei auf diesem stationären Kranz montiert ist und mit dem Lenkrad, das die Lenksäule antreibt, fest verbunden ist, mit einer Verbindungskanalisation (8) zwischen einer Klimaanlage (7), die einen warmen oder kalten Hauptluftdurchfluss im Inneren der Fahrgastzelle liefert, wobei diese Kanalisation den zusätzlichen Luftdurchfluss entnimmt, um ihn in den Verteiler (2) durch den stationären Kranz (3) einzulassen, wobei dieser zusätzliche Durchfluss von einem Umlenkrohr (9) aufgenommen wird, das mit dem Verteiler durch den beweglichen Kranz (4) verbunden ist, wobei die in dieses Umlenkrohr eingelassene Luft in einen Hohlbereich (10) geliefert wird, der im Inneren des Lenkrads (1) eingerichtet ist, und aus diesem Hohlbereich durch mehrere Ausgangsöffnungen (12) die mit dem Hohlbereich in Verbindung ist, nach außen abgeleitet wird, und vorzugsweise in dem Greifkreis (11), der den Umfang dieses Lenkrads bildet, regelmäßig verteilt angeordnet sind, **dadurch gekennzeichnet, dass** das Umlenkrohr (9) zwischen dem beweglichen Kranz (4) des zylindrischen Verteilers (2) und dem Hohlbereich (10) im Inneren des Lenkrads (1) mit einem Raumdeodorantvorrat (18) verbunden ist, der einen einstellbaren Bruchteil des zusätzlichen Luftflusses, der von dem Verteiler kommt, vor seinem Einlassen in das Lenkrad imprägnieren kann.

2. Diffusionsvorrichtung nach Anspruch 1, **dadurch gekennzeichnet, dass** der Verteiler (2) und der Deodorantvorrat (18) über einen einstellbaren Mischer (13) verbunden sind, der den zusätzlichen Luftdurchfluss, der von dem Umlenkrohr (9) geliefert wird, derart verteilen kann, dass ein variabler und einstellbarer Bruchteil dieses Durchflusses den Deodorantvorrat durchquert, um sich damit vor dem Einlassen in das Lenkrad (1) zu imprägnieren.

3. Diffusionsvorrichtung nach Anspruch 2, **dadurch gekennzeichnet, dass** der einstellbare Mischer (13) einen stationären Rahmen (14) aufweist, der mit einer Einlassöffnung des zusätzlichen Luftdurchflusses, der von dem Verteiler (2) über das Umlenkrohr (9) in eine innere Aufnahme (15) kommt, versehen ist, die mit zwei getrennten Leitungen (16, 17) verbunden ist, die jeweils mit dem Eingang und dem Ausgang des Deodorantvorrats (18) kommunizieren, ein Bypassrohr (27), das zwischen dem Umlenkrohr und der Leitung (17), die mit dem Ausgang des Deodorantvorrats verbunden ist, und einem Schieber (24), der im Inneren der internen Aufnahme gleitet, der mit mindestens zwei Querbohrungen oder Ähnlichem (45, 46) versehen ist, montiert ist, deren Position mit dem Bewegen des Schiebers das einstellbare Öffnen oder Schließen dieser zwei Leitungen (16, 17) erlaubt, damit der Deodorantvorrat von einem variablen Bruchteil des zu imprägnierenden zusätzlichen Luftdurchflusses durchquert wird.

4. Diffusionsvorrichtung nach Anspruch 3, **dadurch gekennzeichnet, dass** der gleitende Schieber (24) des Mischers (13) außerhalb des stationären Rahmens (14) einen Bedienstift (29) aufweist, der das Bewegen dieses Schiebers in der internen Aufnahme (15) veranlassen und auf die relative Position der Querbohrungen (25, 26) gegenüber Eingangs- und Ausgangsleitungen (16, 17) des Deodorantvorrats (18) einwirken kann.

5. Diffusionsvorrichtung nach einem der Ansprüche 3 oder 4, **dadurch gekennzeichnet, dass** der Bedienstift (29) mit einem Hebel (32), der eine Nocke bildet, der schwenkend in Bezug zu dem stationären Rahmen (14) des Mischers (13) um eine exzentrische Rotationsachse (33) montiert ist, zusammenwirkt, wobei die Positionssteuerung des schwenkenden Hebels (32) das Bewegen des Stifts (29) und daher des gleitenden Schiebers (24) in der internen Aufnahme (15) des Mischers veranlasst.

6. Diffusionsvorrichtung nach Anspruch 5, **dadurch gekennzeichnet, dass** der Hebel (32), der eine Nocke bildet, ein äußeres Profil in Kreissektorform (35) um die Rotationsachse (33) derart bildet, aufweist, dass eine tangentiale Kraft, die auf dieses Profil ausgeübt wird, es erlaubt, den Hebel um diese Achse zu schwenken, indem das Bewegen des gleitenden Schiebers (24) in der internen Aufnahme (15) des Mischers (13) über den Stift (29) der in einem länglichen Schlitz (30), der auf dem Hebel vorgesehen ist, gleiten kann, veranlasst wird.

7. Diffusionsvorrichtung nach Anspruch 6, **dadurch gekennzeichnet, dass** das Außenprofil in Kreissektorform (35) des Hebels, der eine Nocke (32) bildet, geriffelt ist, um ein Steuerrädchen (36) zu bilden, das in die eine Richtung oder in die andere von dem Finger des Fahrers betätigt werden kann.

8. Diffusionsvorrichtung nach Anspruch 7, **dadurch gekennzeichnet, dass** das Steuerrädchen (36) in einer Öffnung (38) untergebracht ist, die in einem diametralen Arm (37), der die Lenksäule (5) mit dem Greifkreis (11) des Lenkrads (1) verbindet, eingerichtet ist.

9. Diffusionsvorrichtung nach den Ansprüchen 1 bis 8, **dadurch gekennzeichnet, dass** die Ausgangsöffnungen (12) individualisiert sind, wobei ein Teil (12a) dieser Öffnungen dem Abgeben purer Luft, die von der Klimaanlage (7) über einen einstellbaren Mischer (13) kommt, und der andere Teil (12b) dem Abgeben von eventuell über diesen Mischer und einen Deodorantvorrat (18) parfümierter Luft vorbehalten ist, wobei diese Öffnungen (12a, 12b) jeweils mit zwei unabhängigen und getrennten Teilen (10a, 10b) des Hohlbereichs (10) in Kommunikation sind, die von zwei getrennten Leitungen zum Anschließen jeweils mit den Ausgängen des einstellbaren Mischers (13) und dem Raumdeodorantvorrat (18) versorgt werden.

10. Diffusionsvorrichtung nach den Ansprüchen 1 bis 9, **dadurch gekennzeichnet, dass** der Verteiler (2) und der Raumdeodorantvorrat (18) über den einstellbaren Mischer (13) verbunden sind, der den zusätzlichen Luftdurchfluss, der von dem Umlenkrohr (9) geliefert wird, derart verteilen kann, dass ein variabler und einstellbarer Bruchteil dieses Durchflusses den Raumdeodorantvorrat durchquert, um sich damit vor dem Einlassen in das Lenkrad (1) zu imprägnieren.

11. Diffusionsvorrichtung nach den Ansprüchen 1 bis 10, **dadurch gekennzeichnet, dass** der einstellbare Mischer (13) einen stationären Rahmen (14) aufweist, der mit einer Einlassöffnung des zusätzlichen Luftdurchflusses, der von der Klimaanlage über das Umlenkrohr (9) kommt, versehen ist, eine interne Aufnahme (15), die von zwei getrennten Kommunikationsleitungen (16, 17) jeweils mit dem Eingang des Raumdeodorantvorrats (18) und direkt mit einem der Teile (10a) des Hohlbereichs des Lenkrads verbunden ist, ein Bypassrohr (27), das zwischen dem Umlenkrohr (9) und der Anschlussleitung (23), die mit dem Ausgang des einstellbaren Mischers (18) verbunden ist, montiert ist, und einen Schieber (24), der im Inneren der internen Aufnahme gleitet, versehen mit Querbohrungen oder Ähnlichem (25, 26), deren Position zu der Position des Schiebers das einstellbare Öffnen oder Schließen der zwei Kommunikationsleitungen für das Durchqueren des Deodorantvorrats durch den variablen Bruchteil des zu imprägnierenden zusätzlichen Luftdurchflusses erlaubt.
